# EUROPÄISCHE PATENTSCHRIFT

(11) **EP 1 257 973 B1**
(45) Veröffentlichungstag und Bekanntmachung des Hinweises auf die Patenterteilung: **18.06.2003**
(21) Anmeldenummer: 01915034.1
(22) Anmeldetag: 22.02.2001
(51) Int. Cl.: G07C 5/00, G07B 15/00

(54) **KOSTENGESTEUERTE AKTIVIERUNG EINES KRAFTFAHRZEUGES**
COST-CONTROLLED ACTIVATION OF A MOTOR VEHICLE
MISE EN ACTIVITE A COUT CONTROLE D'UNE AUTOMOBILE

(30) Priorität: 23.02.2000 DE 10008352
(43) Veröffentlichungstag der Anmeldung: 20.11.2002
(73) Patentinhaber: Riegler, Robert M., 67459 Böhl-Iggelheim (DE)
(72) Erfinder: Riegler, Robert M., 67459 Böhl-Iggelheim (DE)
(74) Vertreter: Kreutzer, Ulrich, Dipl.-Phys.
(86) Internationale Anmeldenummer: DE0100686
(87) Internationale Veröffentlichungsnummer: WO01063564

(56) Entgegenhaltungen:
- WO-A-95/13594
- WO-A-97/43151
- DE-A- 4 301 039
- DE-A- 4 324 762
- DE-A- 4 427 392
- US-A- 5 459 304

## Beschreibung

Die Erfindung betrifft ein Kraftfahrzeug mit einer Vorrichtung zur kostengesteuerten Inbetriebnahme, die eine erste Datenübertragungseinrichtung zur Übermittlung von Daten von dem Kraftfahrzeug an zumindest eine Empfangsstation und eine, ein Gerät zur Messung der vom Kraftfahrzeug zurückgelegten Wegstrecke mit der ersten Datenübertragungseinrichtung verbindende zweite Datenübertragungseinrichtung aufweist, wobei die erste Datenübertragungseinrichtung mit einer Sendefunktion versehen ist und die erste Datenübertragungseinrichtung derart ausgebildet ist, dass die Daten von dem Kraftfahrzeug über die Sendefunktion zu der Empfangsstation drahtlos kontinuierlich oder in vorgegebenen Intervallen übermittelbar sind und die Daten in einer mit der Empfangsstation verbundenen Zentralstation verarbeitbar sind.

Die Erfindung betrifft ferner ein Verfahren zur individuellen Erfassung der Kosten einer Fahrt mit einem Kraftfahrzeug, wobei bei diesem Verfahren die von dem Fahrer zurückgelegte Wegstrecke ermittelt wird, die Daten der von dem Fahrer zurückgelegten Wegstrecke und eventuell zusätzlich Daten über die Identität des Fahrers über die erste Datenübertragungseinrichtung und die zweite Datenübertragungseinrichtung an die Empfangsstation und von dort an die Zentralstation übermittelt werden und die benutzerspezifisches Kosten, die durch das Zurücklegen der Wegstrecke entstanden sind, errechnet und abspeichert werden.

Ein solches Verfahren ist aus dem deutschen Patentanmeldung 43 24 762 bekannt. In dieser Druckschrift ist eine so genannte Wegfahrsperre beschrieben, die eine Nutzeridentifikation des Fahrers voraussetzt. Hierbei wird ein Datenerfassungssystem zur nutzerabhängigen Verwaltung gemeinschaftlich genutzter Kraftfahrzeuge verwendet, wobei eine Zeit bezogene Zuordnung beliebiger Daten über zurückgelegte Strecken eines Nutzers möglich ist und ein temporäres Auslesen der gesammelten Daten in ein transportables Medium vorgesehen ist.

Aus der deutschen Patentanmeldung 44 27 392 ist ein System zur Erhebung von Straßenbenutzungsgebühren bekannt, das die Position eines Fahrzeugs über ein Ortungssystem ermittelt und in Abhängigkeit der zurück gelegten Wegstrecken Gebühren für die Straßennutzung von einem bargeldlosen Konto abbucht. Dieses bargeldlose Konto kann zum Beispiel eine in einem Bordrechner des Fahrzeugs eingesteckte Geldkarte sein.

Die internationale Patentanmeldung WO 95 13 594 beschreibt ein System zur Aufzeichnung von Fahrtrouten. Dem Gerät wird vor Fahrtbeginn über einen Chipkartenleser die Identität des Fahrers mitgeteilt, wobei der Fahrer vor Fahrtantritt eine individuelle Chipkarte in ein Lesegerät einstecken muss. Schließlich beschreibt das US-Patent 5,459,304 ein Chipkartensystem, über das mehrere fahrzeug- und nutzerspezifische Daten in einer Datenbank aufgezeichnet werden können.

Femer ist ein solches Kraftfahrzeug und Verfahren der eingangs genannten Art aus der deutschen Offenlegungsschrift 199 34 327 bekannt. Bei diesem Kraftfahrzeug werden die Daten über die zurückgelegte Fahrt dem Fahrer zugeordnet und diese Daten drahtlos einer zentralen Datenverarbeitung übermittelt.

Alle vorgenannten bekannten Druckschriften weisen jedoch den Nachteil auf, dass eine individuelle Abrechung der von dem Fahrer verursachten Kosten nicht erfolgen kann. Ferner ist es nicht möglich, die Kosten bestimmten Einsatzzwecken zuzuordnen oder vor Fahrtantritt einen Bonitätsnachweis zu erbringen, der sicher stellt, dass die Kosten tatsächlich gedeckt sind. Vielmehr müssen die Kosten dem Fahrer zugerechnet werden und dann extern verarbeitet und eingetrieben werden. Dies macht die Erfassung der Bewegung des Fahrzeuges zwar einfach, erlaubt aber keine flexible Nutzung des Fahrzeuges durch mehrere Fahrer, ohne dass ein erhöhter Abrechnungsaufwand getrieben werden müsste.

Ein großer Teil der Kraftfahrzeuge wird heute jedoch sowohl privat als auch geschäftlich genutzt. Bei geschäftlicher Nutzung, insbesondere bei Firmenfahrzeugen, werden die Fahrzeuge darüber hinaus häufig von verschiedenen Fahrern genutzt. Weiterhin gewinnt das sogenannte "Car-Sharing", also die gemeinsame Nutzung von Fahrzeugen durch mehrere (Privat)-Personen bei entsprechender Kostenteilung, zunehmend an Verbreitung. Bei allen geschilderten Arrangements stellt sich häufig die Frage, welche Fahrten welcher Nutzungsart (privat oder geschäftlich) oder welchem Nutzer zuzuordnen sind, was insbesondere dann relevant wird, wenn die Kosten verursachergerecht zugeordnet werden sollen.

Bisher wurde zur Lösung dieser Probleme üblicherweise ein Fahrtenbuch verwendet, welches gegebenenfalls mechanisch oder elektronisch mit dem Tachometer des Kraftfahrzeugs verbunden sein kann. Die Verwendung dieser herkömmlichen Fahrtenbücher ist jedoch umständlich, die erfassten Daten sind leicht manipulierbar und die Analyse der erfassten Daten für den jeweiligen Zweck, also beispielsweise zur Ermittlung der verursacherbezogenen Kosten oder der Zuordnung zur privaten oder geschäftlichen Tätigkeit, ist umständlich und erfordert in der Regel eine manuelle Übertragung der Daten in Tabellen oder andere Zusammenstellungen.

Aus der deutschen Offenlegungsschrift 41 29 148 ist ein elektronisches Fahrtenbuch bekannt. Dieses Fahrtenbuch hat zwar den Vorteil, dass mit ihr Daten der zurückgelegten Wegstrecke automatisch aufgezeichnet und später manuell ausgewertet bzw. über üblichen Datenträgeraustausch in einen externen Rechner eingelesen und dort weiterverarbeitet werden können, jedoch muss die eigentliche Verabreitung der Daten vom Fahrer selbst initiiert oder vorgenommen werden. Eine Kontrolle oder gar selbsttätige Kostenerfassung bzw. -abrechnung ist hiermit nicht besser möglich als mit einem herkömmlichen Fahrtenbuch.

Es ist daher eine erste Aufgabe der vorliegenden Erfindung, ein Kraftfahrzeug zu schaffen, das eine leichte Abrechnung der Fahrtkosten möglicht.

Diese Aufgabe wird nach der Erfindung dadurch gelöst, dass das Kraftfahrzeug eine Kostenlegitimation aufweist, die von einem Lesegerät für einen von dem Fahrer vorzulegenden Bonitätsnachweis gebildet ist, wobei die Freigabeschaltung eine Startbereitschaft des Kraftfahrzeuges erst nach positiver Prüfung des Bonitätsnachweises herzustellen vermag.

Es ist eine weitere Aufgabe der vorliegenden Erfindung, ein Verfahren zu schaffen, bei dem die Kosten einer Fahrt des Kraftfahrzeuges ermittelt werden können und die Fahrtberechtigung von der Kostentragung abhängig gemacht werden kann.

Diese weitere Aufgabe wird nach der Erfindung dadurch gelöst, dass eine Startbereitschaft des Kraftfahrzeuges nur nach positiver Prüfung eines von dem Fahrer über ein Lesegerät vorzulegenden Bonitätsnachweis hergestellt wird und die Kosten von einem Guthaben des Fahrers abgezogen werden.

Das erfindungsgemäße Fahrzeug überträgt Daten über die zurückgelegte Wegstrecke eines Kraftfahrzeugs an eine oder mehrere Empfangsstationen. Vorteilhaft ist dabei die Nutzung etablierter Mobilfunknetze, dass heißt die Fahrtdaten können über wechselnde Primärempfangsstationen an eine zentrale Empfangsstation übertragen werden, wo die Daten erfasst und ausgewertet werden können. Für den Fall, dass eine verursachergerechte Zuordnung und Abrechnung der Kraftfahrzeugkosten gewünscht ist, kann auch die Abrechnung in analoger Weise wie die Mobiltelefonkosten erfolgen: anstatt der Anzahl der Gesprächseinheiten können erfindungsgemäß die von dem Kostenträger zurückgelegten Kilometer summiert werden und die Grundlage der Abrechnung bilden.

Als erste Datenübertragungseinrichtung empfiehlt sich für diese Ausführungsform ein übliches Mobiltelefon oder ein vereinfachtes Gerät, bei welchem lediglich Daten gesendet, nicht jedoch empfangen werden können. Geeignete Module sind beispielsweise GSM (Global System for Mobile Communication) oder UMTS (Universal Mobile Telecommunication System). In einer einfachen Ausführungsform der erfindungsgemäßen Vorrichtung, bei der lediglich die zurückgelegte Wegstrecke, gegebenenfalls auch Angaben über den Start- und Zielort oder über den Fahrer an eine stationäre Empfangsstation gesendet werden, ist nur die Sendefunktion erforderlich. Eine Empfangsfunktion ermöglicht jedoch weitere vorteilhafte Nutzungsmöglichkeiten der Vorrichtung.

So ist es beispielsweise möglich, das Kraftfahrzeug von der zentralen Station aus nur für bestimmte Nutzungsarten oder für bestimmte Fahrer freizugeben. Insbesondere bei Leasingfahrzeugen wird dadurch eine Sperrung des Fahrzeugs bei Nichtzahlung der Leasingraten ermöglicht. Auch eine Diebstahlsicherung ist auf diese Weise möglich: nur dem berechtigten Fahrer, der sich durch eine geeignete ldentitätsüberprüfung (Chipcard, Eingabecode oder dergleichen) ausgewiesen hat, wird das Fahrzeug bei Fahrtantritt freigeschaltet, bei unberechtigter Inbetriebnahme wird das Fahrzeug dagegen von der Zentrale gesperrt, d. h. die Identifizierung des berechtigten Fahrers ist Voraussetzung für die Startbereitschaft des Kraftfahrzeugs.

Eine vorteilhafte Ausführungsform der erfindungsgemäßen Vorrichtung ist daher dadurch gekennzeichnet, dass die erste Datenübertragungseinrichtung sowohl Sende- als auch Empfangsfunktion aufweist.

Als zweite Datenübertragungseinrichtung der erfindungsgemäßen Vorrichtung kommen insbesondere zwei Ausführungsförmen in Betracht. Eine einfachere Ausführungsform ist dadurch gekennzeichnet, dass die zweite Datenübertragungseinrichtung eine Verbindung zwischen dem Kilometerzähler des Kraftfahrzeugs und der ersten Datenübertragungseinrichtung darstellt. Der Kilometerzähler selbst muss in dieser Ausführungsform nicht Bestandteil der erfindungsgemäßen Vorrichtung sein; er muss lediglich die Kilometerangaben in geeigneter, dass heißt in der Regel in elektronischer Form an die Vorrichtung weiterleiten können. Auf diese Weise ist natürlich nur die zurückgelegte Entfernung übermittelbar, was für viele Anforderungen ausreichend sein mag.

Insbesondere wenn später der Nachweis erbracht werden soll, ob eine Fahrt privater oder geschäftlicher Art war, reicht jedoch die alleinige Dokumentation der zu einer bestimmten Zeit zurückgelegten Kilometerzahl oft nicht aus. Für diesen Nachweis ist dagegen eine dokumentierte Angabe über das Ziel der Fahrt, möglicherweise auch über die gewählte Route sehr gut geeignet. Diese Daten können in besonders exakter Weise durch ein sogenanntes GPS erfasst werden. Für diesen Fall stellt die zweite Datenübertragungseinrichtung also eine Verbindung zwischen der ersten Datenübertragungseinrichtung und einem GPS dar. Dieses GPS kann als unabhängiges Gerät mit der erfindungsgemäßen Vorrichtung kombiniert werden. Es kann vorteilhaft jedoch auch in die Vorrichtung integriert werden.

Eine besonders vorteilhafte Ausführungsform der erfindungsgemäßen Vorrichtung ist daher dadurch gekennzeichnet, dass Wegstreckenzählung und/oder die Standortbestimmung des Kraftfahrzeuges über ein "Global Positioning System" (GPS) erfolgt.

Soll die erfindungsgemäße Vorrichtung für die Differenzierung zwischen privaten und geschäftlichen Fahrten genutzt werden, ist es vorteilhaft, wenn der Fahrer bereits vor der betreffenden Fahrt festlegt, ob die Fahrt in die private oder geschäftliche Kategorie fällt. Diese Festlegung kann beispielsweise dadurch erfolgen, dass der Fahrer manuell eine entsprechende Eingabe in das Gerät eingibt. Dafür kann die Vorrichtung mit einer entsprechenden Wahltaste oder ähnlichem ausgerüstet sein. Es ist jedoch auch denkbar, dass der Fahrer unterschiedliche Identitätskarten oder Codes für die jeweilige Nutzungsart hat oder dass die Identitätskarte in unterschiedlicher Orientierung in das Gerät eingeführt werden kann.

Die Datenübertragung kann im Prinzip kontinuierlich erfolgen. Wegen der damit verbundenen Kosten ist jedoch eine intermittierende Übertragung der Daten von Vorteil. Besonders vorteilhaft ist eine Übertragung von Daten nur bei Fahrtantritt und Fahrtende. Sollen auch Daten über die Route oder Fahrtunterbrechungen übertragen werden, ist es vorteilhaft, diese Daten zunächst zu speichern und die kumulierten Fahrtdaten am Ende der Fahrt oder am Ende eines Tages oder einer anderen Zeiteinheit an die Zentralstation zu übertragen. Um nicht jede Fahrtunterbrechung als Fahrtende zu registrieren kann die Vorrichtung auch so ausgestaltet sein, dass das Fahrtende manuell als solches durch entsprechende Eingabe angegeben wird oder dass erst die erneute Eingabe der Identitätskarte oder des Sicherheitscodes eine neue Fahrt mit entsprechend neuer Abrechnung markiert.

Neben der zurückgelegten Wegstrecke ist die Fahrtzeit ein weiterer wichtiger Parameter, der dokumentiert werden sollte. Vorteilhaft ist daher eine erfindungsgemäße Vorrichtung, welche zusätzlich eine Funkuhr oder eine Verbindung mit einer Funkuhr enthält. Im Gegensatz zu dezentral einstellbaren Uhren hat die Funkuhr den Vorteil, nicht vom Nutzer manipuliert werden zu können. Die Funkuhr kann sich beispielsweise im Kraftfahrzeug selbst befinden, beispielsweise in der Vorrichtung selbst. Es ist jedoch auch denkbar, die Zeit in der stationären Empfangsstation zu registrieren. Diese Form setzt voraus, dass Daten jeweils zu Beginn und zum Ende der Fahrt versendet werden müssen.

Als Fahreridentifizierung kann die erfindungsgemäße Vorrichtung eine Vorrichtung zur Identifizierung des Fahrers des Kraftfahrzeugs enthalten. Für dieses Identifizierungsmodul sind mehrere Ausführungsformen denkbar. So kann die Identifizierung des Fahrers über die Eingabe eines Codes erfolgen. Besonders vorteilhaft weil noch sicherer ist eine Vorrichtung, bei der die Fahreridentifizierung eine Vorrichtung zur Aufnahme einer Identitätskarte ist. Als Identitätskarten kommen z. B. übliche Chipoder Magnetstreifenkarten in Betracht. Geräte zur Aufnahme solcher Chip- oder Magnetstreifenkarten, also Lesegeräte für solche Identitätskarten sind weit verbreitet und bekannt. Gewünschtenfalls kann die Identitätsprüfung auch eine Kombination von Identitätskarte und Code-Eingabe erfordern, wie bei Kreditkarten üblich.

Eine besonders vorteilhafte Vorrichtung im Sinne der vorliegenden Erfindung ist dadurch gekennzeichnet, dass sie als erste Datenübertragungseinrichtung (A) ein GSM- oder UMTS-Modul, als Wegstreckenzähler ein GPS und als Fahreridentifizierung eine Vorrichtung zur Aufnahme einer Identitätskarte enthält. Die einzelnen Komponenten dieser besonders vorteilhaften Ausführungsform sind dem Fachmann bekannt und sind in vielfältigen Versionen im Handel erhältlich. Auch die Verbindung der einzelnen Komponenten zu der erfindungsgemäßen Vorrichtung erfordert keine Kenntnisse oder Angaben, die über das Allgemeinwissen des Fachmanns hinausgehen.

Die erfindungsgemäße Vorrichtung, insbesondere die vorstehend als besonders vorteilhafte Ausführungsform dargestellte, sollte so ausgestaltet sein, daß die Übermittlung folgender Daten vom Kraftfahrzeug an die Zentralstation ermöglicht wird: Bei Fahrantritt sollten, nach Prüfung der Legitimation des Fahrers und gegebenenfalls Freischaltung des Fahrzeugs durch die Zentralstation, das Datum, die Uhrzeit, der Standort (möglicherweise mit Straßenbezeichnung), der Kilometerstand sowie eine Angabe des Fahrers, ob es sich um eine private oder geschäftliche Fahrt handelt, übertragen werden können. Bei Fahrtende sollten wiederum Datum, Uhrzeit, Ort (Straße) und Kilometerstand erfasst und diese Daten übertragen werden können.

Die beschriebene Vorrichtung, auch in ihrer einfachsten Form, erfüllt alle Anforderungen an ein elektronisches Fahrtenbuch und kann erfindungsgemäß entsprechend verwendet werden. Besonders vorteilhaft ist jedoch die Verwendung der Vorrichtung zur verursachergerechten Zuordnung von Kraftfahrzeugkosten, etwa beim Car-Sharing sowie zur manipulationssicheren Dokumentation von Fahrtdaten hinsichtlich des Nachweises geschäftlicher oder privater Nutzung, wie es z. B. von den Finanzbehörden gefordert wird.

Neben der Möglichkeit, die Fahrtdaten an eine Mobilfunkempfangstation zu übertragen, ist die Übertragung der Daten zu einer zentralen Datenstation, insbesondere über das Internet vorteilhaft. Die erste Datenübertragungseinrichtung muss dazu in der Lage sein, Daten an das Internet zu senden. Denkbar ist dafür beispielsweise die Nutzung eines intemetfähigen Mobiltelefons oder einer analogen Einheit, welche diese Fähigkeit aufweist. Auch bei der Nutzung des Internets zur Weiterleitung der Fahrdaten ist es möglich, neben der Kostenzuordnung und Abrechnung auch eine Identifizierung des Fahrers und gegebenenfalls eine Freischaltung des Kraftfahrzeugs nach Kontrolle der Identitätsdaten des Fahrers durchzuführen.

Ein weiterer großer Vorteil der erfindungsgemäßen Kostenerfassung und Abrechnung liegt darin, dass die Kosten einfach, ohne weiteren Bonitätsnachweis oder ein Ausfallrisiko, erfasst und abgerechnet werden können. So kann beispielsweise ein Mietwagenanbieter die Abrechnung der Kosten für die Wagennutzung über das Erfindungsgemäße System vornehmen. Hierzu kann der Kunde eine Karte in das Lesegerät einlegen und so die Gebühren für die Anmietung zahlen. Bevorzugt werden bei einem solchen System sogenannte Pay-Cards oder sogenannte Pre-Paid-Karten verwendet, die etwa vom Hersteller erworben werden und dann, ähnlich wie es bei Telefonkarten der Fall ist, verbraucht werden können.

Das Lesegerät kann dann entweder eine zusätzliche Schreibfunktion aufweisen, so dass wie bei der genannten Telefonkarte das Guthaben analog zu den verbrauchten Kosten reduziert werden kann. Bei einem solchen System wird bevorzugt der Benzinpreis in die Kosten einkalkuliert, so dass der Fahrer zum Beispiels bei einer Mehrzahl von Vertragstankstellen berechtigt ist, kostenlos zu tanken und der Vermieter sich nicht um die Auffüllung des Tank kümmern muss. Ein Leihwagenhersteller kann so auf bloßes Vorlegen einer Berechtigungskarte den Wagen herausgeben und muss sich nicht um die Vertragsbedingungen oder ähnliches kümmern. Insbesondere bei Vermietung an Firmenangehörige, deren Firma mit dem Anbieter einen Rahmenvertrag abgeschlossen hat, kann dies den Anmietungsvorgang besonders einfach gestalten ohne das zusätzliches Risiko eingegangen werden müsste.

Vorteilhafterweise kann der Fahrzeuginhaber über das GPS oder Datenübertragungssystem ermitteln, wo sich sein Fahrzeug zumindest bei Fahrtende befindet Dies ermöglicht eine besonders flexible Vermietung von Fahrzeugen, nämlich dass der Mieter das Fahrzeug nicht zurückbringt sondern innerhalb eines vereinbarten Raumes zurücklässt. Das Fahrzeug kann dann von einem anderen Mieter übernommen werden. Auf diese Weise lässt sich beispielsweise effektiv der knappe Parkraum einer modernen Innenstadt bewirtschaften. Die Stadtverwaltung oder private Anbieter können eine Flotte von Kleinwagen in der Innenstadt anbieten, denen etwa gesonderte Parkplätze zur Verfügung stehen und die erfindungsgemäß ausgestattet sind. Diese Fahrzeuge können über den Bonitätsnachweis freigeschaltet werden, etwa durch Einlegen einer Prepaid-Karte oder einer Kreditkarte.

Der Mieter fährt innerhalb der Innenstadt die gewünschte Strecke und lässt das Fahrzeug am Zielort zurück. Dort wird es von einem anderen Fahrer übernommen, der es wiederum an einer anderen Stelle zurücklässt. Der Vermieter oder Inhaber kann die Bewegung des Fahrzeuges anhand des GPS Systems überwachen und zum Beispiel Fahrzeuge, die außerhalb des Innenstadtbereiches geparkt wurden, zurückholen. Die zentrale Datenverarbeitung kann hierbei über die selbsttätige Fahreridentifikation den Fahrer ermitteln und die Daten abspeichern. Besonders vorteilhaft werden dabei auch die Uhrzeiten und die Fahrtrouten erfasst, damit im Falle von Verkehrsübertretungen oder Unfällen mit Fahrerflucht der Fahrer ermittelt werden kann.

Die selbsttätige Fahreridentifikation erlaubt eine Prüfung, ob der Fahrer im Besitz eines gültigen Führerscheines ist. Wenn die Datenschutzrechtlichen Bestimmungen dies zulassen, zum Beispiels über einen Abgleich der Fahrerdaten mit einer Zentralkartei. Meist wird dies jedoch nicht möglich sein, dann kann der Fahrer einen Codeträger ausgehändigt bekommen, der seine persönlichen Daten enthält und ihm nur nach Vorlage einer Fahrerlaubnis ausgehändigt wird.

Es ist auch möglich, die Kartenfunktionen zu kombinieren. So kann etwa ein Mietwagen über eine Karte aktiviert werden, die in einer Orientierung in das Lesegerät eingeschoben, die Kosten über die Datenübertragung von einem Konto abbucht. Wird die Karte, die zum Beispiel einen Speicher-Chip enthalten kann, in der anderen Orientierung eingelegt, kann das Lesegerät die Kosten von einem Guthaben abbuchen, das in dem Speicherchip gespeichert ist.

## Patentansprüche

1. Kraftfahrzeug mit einer Vorrichtung zur kostengesteuerten Inbetriebnahme, die eine erste Datenübertragungseinrichtung (A) zur Übermittlung von Daten von dem Kraftfahrzeug an zumindest eine Empfangsstation und eine, ein Gerät zur Messung der vom Kraftfahrzeug zurückgelegten Wegstrecke mit der ersten Datenübertragungseinrichtung (A) verbindende zweite Datenübertragungseinrichtung (B) aufweist, wobei die erste Datenübertragungseinrichtung (A) mit einer Sendefunktion versehen ist und die erste Datenübertragungseinrichtung (A) derart ausgebildet ist, dass die Daten von dem Kraftfahrzeug über die Sendefunktion zu der Empfangsstation drahtlos kontinuierlich oder in vorgegebenen Intervallen übermittelbar sind und die Daten in einer mit der Empfangsstation verbundenen Zentralstation verarbeitbar sind, **dadurch gekennzeichnet, dass** es eine Kostenlegitimation aufweist, die von einem Lesegerät für einen von dem Fahrer vorzulegenden Bonitätsnachweis gebildet ist, wobei die Freigabeschaltung eine Startbereitschaft des Kraftfahrzeuges erst nach positiver Prüfung des Bonitätsnachweises herzustellen vermag.

2. Kraftfahrzeug nach Anspruch 1, **dadurch gekennzeichnet, daß** es eine Vorrichtung zur selbsttätigen Identifizierung des Fahrers aufweist, die insbesondere von einem individuellen Codemittel oder einem Verifikationsgerät gebildet ist, in das ein persönlicher Code einzugeben ist.

3. Kraftfahrzeug nach Anspruch 1 oder 2, **dadurch gekennzeichnet, daß** der Bonitätsnachweis von einer in das Lesegerät eingelegten Kreditkarte gebildet ist.

4. Kraftfahrzeug nach Anspruch 3, **dadurch gekennzeichnet, daß** der Bonitätsnachweis von einer in das Lesegerät eingelegten Prepaid-Karte mit einem darauf angeordneten elektronischen Guthabenspeicher gebildet ist.

5. Kraftfahrzeug nach Anspruch 4, **dadurch gekennzeichnet, daß** das Lesegerät eine Lese-/Schreibfunktion aufweist, die den Guthabenspeicher auszulesen und nach Abzug verursachter Kosten die hierdurch angefallene Guthabenverminderung auf der Karte abzuspeichern vermag.

6. Kraftfahrzeug nach einem der vorstehenden Ansprüche, **dadurch gekennzeichnet, daß** das Lesegerät von der Vorrichtung zur Identifizierung des Fahrers gebildet ist.

7. Verfahren zur individuellen Erfassung der Kosten einer Fahrt mit einem Kraftfahrzeug nach einem der vorstehenden Ansprüche mit den Schritten
- Ermitteln der von dem Fahrer zurückgelegten Wegstrecke
- Übermitteln der Daten über die Identität des Fahrers und der von diesem Fahrer zurückgelegten Wegstrecke über die erste Datenübertragungseinrichtung (A) und die zweite Datenübertragungseinrichtung (B) an die Empfangsstation,
- Übermitteln der Daten an die Zentralstation und Errechnen sowie benutzerspezifisches Abspeichern der Kosten, die durch das Zurücklegen der Wegstrecke entstanden sind,
**dadurch gekennzeichnet, dass**
eine Startbereitschaft des Kraftfahrzeuges nur nach positiver Prüfung eines von dem Fahrer über ein Lesegerät vorzulegenden Bonitätsnachweis hergestellt wird und die Kosten von einem Guthaben des Fahrers abgezogen werden.

8. Verfahren nach Anspruch 7, **dadurch gekennzeichnet, dass** zusätzlich der Fahrer des Kraftfahrzeuges selbsttätig durch Auslesen eines individuellen Codeträgers oder durch Eingabe eines Codes identifiziert wird.

9. Verfahren nach Anspruch 7 oder 8, **dadurch gekennzeichnet, dass** das Guthaben die Kreditlinie einer Kreditkarte ist.

10. Verfahren nach Anspruch 7 oder 8, **dadurch gekennzeichnet, dass** das Guthaben in Form einer Prepaid-Karte vorliegt, die von dem Lesegerät ausgelesen und beschrieben wird.

11. Verfahren nach Anspruch 7 oder 8, **dadurch gekennzeichnet, dass** die ermittelten Kosten der Wegstrecke über die erste Datenübertragungseinrichtung (A) und die Empfangsstation einer Datenverarbeitung übermittelt wird, die das Guthaben in Form eines Verfügungsrahmens verwaltet, der dem Fahrer des Kraftfahrzeuges von einem Verfügungsberechtigten eingeräumt wird, wobei die Datenverarbeitung die auflaufenden Kosten von dem Verfügungsrahmen abzieht.

12. Verfahren nach dem vorhergehenden Anspruch, **dadurch gekennzeichnet, dass** die Datenverarbeitung auf einem über das Internet mit der Empfangsstation verbundenen Rechner abgelegt ist.

13. Verfahren nach dem vorhergehenden Anspruch, **dadurch gekennzeichnet, dass** die Empfangsstation eine Empfangsstation eines Mobilfunknetzes ist, der die Daten im Form einer Daten- oder Textnachricht übermittelt werden und die diese Daten- oder Textnachricht über das Internet der Datenverarbeitung zur Verfügung stellt.

## Revendications

1. Véhicule équipé d'un dispositif de mise en service avec gestion des coûts, constitué d'un premier module (A) de transmission de données du véhicule à au moins une station réceptrice ainsi que d'un second module (B) de transmission de données reliant un appareil qui mesure la distance parcourue par le véhicule au premier module (A) équipé d'une fonction émettrice, ce module (A) étant conçu de manière telle que les données sont transmises sans fil du véhicule à la station réceptrice par l'intermédiaire de la fonction émettrice de façon continue ou à intervalles définis ; ces données, aptes à être traitées dans une station centrale reliée à la station réceptrice, sont **caractérisées par,**
**le fait qu'**elles requièrent une légitimation des coûts effectuée par un lecteur pour une attestation de solvabilité fournie par le conducteur et le déverrouillage n'autorise une mise en route du véhicule qu'après vérification positive de l'attestation de solvabilité.

2. Véhicule selon la revendication 1, **caractérisé par le fait qu'**il est équipé d'un dispositif d'identification automatique du conducteur constitué en particulier d'un code individuel ou d'un appareil de vérification dans lequel il faut entrer un code personnel.

3. Véhicule selon la revendication 1 ou 2, **caractérisé par le fait que** l'attestation de solvabilité est assurée par une carte de crédit introduite dans le lecteur.

4. Véhicule selon la revendication 3, **caractérisé par le fait que** l'attestation de solvabilité est constituée par une carte prépayée introduite dans le lecteur et équipée d'une mémoire électronique indiquant la position du compte.

5. Véhicule selon la revendication 4, **caractérisé par le fait que** le lecteur dispose d'une fonction de lecture/écriture qui permet de lire la position du compte et de mettre en mémoire le nouveau montant sur la carte après déduction des coûts occasionnés.

6. Véhicule selon une des revendications mentionnées ci-dessus, **caractérisé par le fait que** le lecteur est constitué par le dispositif d'identification du conducteur.

7. Procédé de saisie individuelle des coûts d'un trajet avec un véhicule selon une des revendications mentionnées ci-dessus, comprenant les étapes suivantes:
- Calcul de la distance parcourue par le conducteur
- Transmission des données concernant l'identité du conducteur ainsi que la distance qu'il a parcourue à la station réceptrice via le premier module
(A) et le deuxième module (B) de transmission de données
- Transmission des données à la station centrale et calcul ainsi que mise en mémoire des coûts propres à chaque utilisateur occasionnés par le trajet parcouru,
**caractérisé par**
**le fait qu'**une mise en service du véhicule n'est possible qu'après vérification positive d'une attestation de solvabilité présentée par le conducteur via un lecteur et que les coûts sont débités d'un compte du conducteur.

8. Procédé selon la revendication 7, **caractérisé par le fait que** le conducteur du véhicule effectue en plus lui-même son identification par lecture d'un support de code individuel ou par entrée d'un code.

9. Procédé selon la revendication 7 ou 8, **caractérisé par le fait que** l'avoir représente la ligne de crédit d'une carte de crédit.

10. Procédé selon la revendication 7 ou 8, **caractérisé par le fait que** l'avoir est disponible sous forme d'une carte prépayée que le lecteur lira et écrira.

11. Procédé selon la revendication 7 ou 8, **caractérisé par le fait que** les coûts du trajet calculés sont transmis via le premier module de transmission de données (A) et la station réceptrice à une unité de traitement de données qui gère l'avoir sous forme d'un montant autorisé consenti au conducteur du véhicule par une personne autorisée, l'unité de traitement de données retranchant les coûts occasionnés du montant autorisé.

12. Procédé selon la revendication ci-dessus, **caractérisé par le fait que** les données traitées sont stockées sur un ordinateur relié à la station réceptrice via le réseau Internet.

13. Procédé selon la revendication ci-dessus, **caractérisé par le fait que** la station réceptrice fait partie du réseau de téléphonie mobile, station qui reçoit les données sous forme d'un message de données ou d'un message de texte et qui les met à la disposition de l'unité de traitement de données via le réseau Intemet.

## Claims

1. Motor vehicle comprising a cost managed startup system, the system comprising a first data transmission device (A) for transmitting data from the motor vehicle to at least one receiving station and a second data transmission device (B) that connects measuring means for measuring the distance covered by the motor vehicle with the first data transmission device (A), wherein the first data transmission device comprising a transmitting function and wherein the first data transmission device (A) is capable for transmitting data from the motor vehicle via the transmitting function to the receiving station in a wireless manner continually or at predetermined intervals and wherein the data can be processed in a central station that is connected with the receiving station, **characterized in that**
the vehicle comprises a cost legitimizer comprising a reading unit for accepting credit proof to be submitted by a driver of the motor vehicle where the vehicle is released for startup only after the credit proof has been validated.

2. Motor vehicle according to claim 1, **characterized by** an automatic driver identification device, which especially comprises an individual coding means or a verification unit into which the driver inputs a personal code.

3. Motor vehicle according to claim 1 or claim 2, **characterized in that** the credit proof comprises a credit card for insertion into the reading unit.

4. Motor vehicle according to claim 3, **characterized in that** the credit proof comprises a prepaid card with an electronic credit storage arranged thereupon for insertion into the reading unit.

5. Motor vehicle according to claim 4, **characterized in that** the reading unit comprises a reading/writing function capable of reading credit memory available on the prepaid card and storing resultant credit diminution upon the prepaid card after deduction of a generated cost.

6. Motor vehicle according to one of the aforementioned claims, **characterized in that** the reading unit comprises the automatic driver identification device.

7. Process for individually acquiring a cost of a trip in a motor vehicle according to one of the aforementioned claims, comprising the steps
- determining a distance covered by a driver,
- transmitting data comprising the driver's identity and the distance covered by that driver via the first data transmission unit (A) and the second data transmission unit (B) to a receiving station,
- transmitting the data to the central station and calculating and user specific storing the costs arising by driving of the distance,
**characterized by**
making the motor vehicle ready for startup only after a successful examination of a cost legitimizer, which has to be presented by the driver via a reading unit, and deducting the costs from a credit account of the driver.

8. Process according to claim 7, wherein the driver of the motor vehicle is additionally identified automatically by a readout of an individual code carrier or by inputting a code.

9. Process according to claim 7 or claim 8, wherein the credit account is the credit line of a credit card.

10. Process according to claim 7 or claim 8, wherein the credit account is in the form of a prepaid card capable of being read out and written upon by a reading unit.

11. Process according to claim 7 or claim 8, wherein the cost determined for the distance covered is transmitted via the first data transmission unit (A) and the receiving station to a data processing unit that manages the credit account in the form of a general availability credit framework that is granted to the driver of the motor vehicle by a person authorized to grant such permission, where the data processing unit deducts the accruing costs from the generally available credit framework.

12. Process according to one of the above claims, wherein the data processing unit is deposited on a computer that is connected via the Internet with the receiving station.

13. Process according to claim 12, wherein the receiving station is a receiving station of a mobile radio network to which are transmitted the data in the form of a data or text communication that makes this data or text communication available to the data processing unit via the Internet.
